# FASCICULE DE BREVET EUROPEEN

(11) **EP 1 795 390 B1**
(45) Date de publication et mention de la délivrance du brevet: **13.01.2010**
(21) Numéro de dépôt: 06300963.3
(22) Date de dépôt: 20.09.2006
(51) Int. Cl.: B60J 5/04

(54) **Porte de véhicule automobile dont le bas est renforcé à l'égard des chocs latéraux**
Fahrzeugtür bei der der untere Bereich gegen Seitenstösse verstärkt ist
Vehicle door in which the lower part ist reinforced against lateral impacts

(30) Priorité: 08.12.2005 FR 0512465
(43) Date de publication de la demande: 13.06.2007
(73) Titulaire: RENAULT S.A.S., 92100 Boulogne Billancourt (FR)
(72) Inventeur: Pavaut, Thierry, 75018 Paris (FR)

(56) Documents cités:
- FR-A- 2 418 111
- US-A- 4 488 751
- US-A- 5 029 934
- US-A- 5 573 298

## Description

La présente invention concerne une porte de véhicule selon le préambule de la revendication 1, renforcée à l'égard des chocs latéraux. Une telle porte est connue du document US 4 488 751 A.

On sait que les portes de véhicules automobiles comprennent classiquement un panneau extérieur et un panneau intérieur de caisson reliés entre eux à leur partie inférieure par une paroi de bas de porte s'étendant transversalement par rapport aux deux panneaux.

Ces portes offrent une résistance relativement faible à l'égard des chocs latéraux.

Pour remédier à cet inconvénient, les portes de véhicules automobiles sont souvent renforcées par des barres de renfort s'étendant derrière le panneau extérieur de la porte et situées pratiquement à mi-hauteur de la porte.

Cependant, ces barres de renfort sont insuffisantes pour empêcher l'ouverture de la porte vers l'intérieur du véhicule, lors d'un choc latéral à une vitesse inférieure à 60 km/h.

Cette ouverture de la porte vers l'intérieur du véhicule est préjudiciable à l'égard des passagers.

Cette ouverture est due à une trop faible résistance de la partie inférieure de la porte située sous les barres de renfort précitées. En effet, cette trop faible résistance permet à celle-ci de se déformer en passant au-dessus de la feuillure du caisson de bas de caisse du véhicule. La partie inférieure de la porte n'étant plus retenue par cette feuillure, la porte peut s'ouvrir vers l'intérieur, en blessant gravement, voire en tuant, les passagers.

Dans la demande de brevet français n° FR0507462 du 12 juillet 2005 on a décrit une porte de véhicule automobile dont la paroi de bas de porte est renforcée par un élément de renfort fixé à cette paroi et qui s'étend suivant une partie prépondérante de la longueur et de la largeur de cette paroi.

Cet élément de renfort apporte une solution satisfaisante au problème technique ci-dessus.

Le but de la présente invention est d'apporter des améliorations à cette solution.

Suivant l'invention, la porte de véhicule automobile comprenant un panneau extérieur et un panneau intérieur de caisson reliés entre eux dans une partie inférieure de porte par une paroi de bas de porte s'étendant transversalement par rapport aux deux panneaux, caractérisée en ce que la partie inférieure de porte est renforcée par un élément métallique de section transversale sensiblement en U.

Les essais ont montré que grâce à la section sensiblement en U de l'élément de renfort, celui-ci apportait une résistance nettement augmentée du bas de la porte à l'égard des chocs latéraux.

De préférence, une seule paroi choisie parmi les deux ailes latérales et la base de l'élément de renfort est fixée dans la partie inférieure de porte, les deux autres parois étant libres par rapport à la partie inférieure et s'étendant chacune à proximité de la face intérieure du panneau ou de la paroi de bas de porte correspondante.

Avantageusement, un jeu de trois à cinq millimètres est compris entre chacune des parois libres de l'élément de renfort et la face intérieure du panneau ou de la paroi de bas de porte correspondante.

Selon un premier mode de réalisation, l'élément de renfort est fixé sur la paroi de bas de porte.

Selon un deuxième mode de réalisation, l'élément de renfort est fixé sur le panneau extérieur de caisson.

Selon un troisième mode de réalisation, l'élément de renfort est fixé sur le panneau intérieur de caisson.

Selon une variante avantageuse, la base du U de l'élément de renfort comprend une partie centrale plane reliée à chacune des deux ailes latérales par des parties inclinées.

De préférence également, l'élément de renfort est une tôle d'acier pliée. Un tel élément de renfort est particulièrement simple et peu coûteux à fabriquer.

En variante, l'élément de renfort peut également être en aluminium embouti.

D'autres particularités et avantages de l'invention apparaîtront encore tout au long de la description exemplaire ci-après.

Aux dessins annexés, donnés à titre d'exemples, non limitatifs.
- la figure 1 est une vue en perspective d'un élément de renfort du bas d'une porte de véhicule automobile selon un mode de réalisation particulier de l'invention,
- la figure 2 est une vue en coupe transversale d'une porte de véhicule automobile selon un mode de réalisation particulier de l'invention comportant l'élément de renfort représenté sur la figure 2, et du caisson de bas de caisse du véhicule.
- La figure 3 est une vue analogue à la figure 2, montrant la déformation de la porte sous l'effet d'un choc latéral.

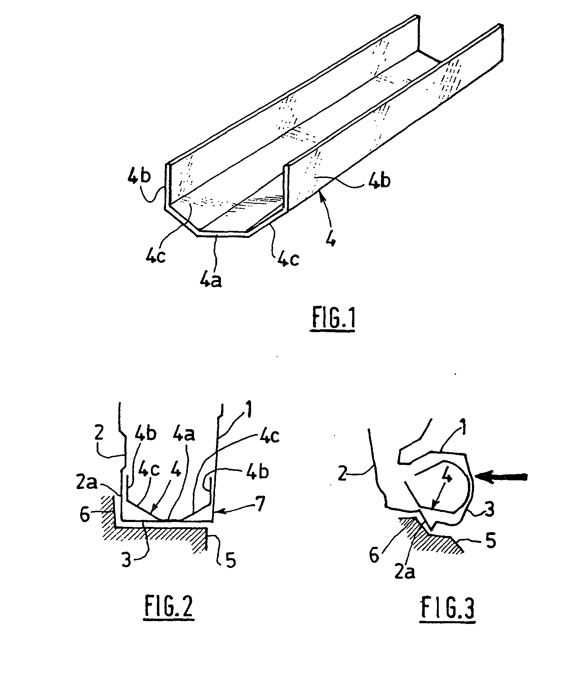

Le schéma de la figure 2, montre que la porte de véhicule automobile comprend un panneau extérieur 1 et un panneau intérieur de caisson 2 reliés entre eux dans la partie inférieure 7 de la porte par une paroi 3 de bas de porte s'étendant transversalement par rapport aux deux panneaux 1 et 2.

Suivant l'invention, la partie inférieure 7 de porte est renforcée par un élément métallique 4 de section transversale sensiblement en U (voir également la figure 1). Cet élément de renfort 4 est placé entre les panneaux extérieur 1 et intérieur 2, et s'étend suivant une partie prépondérante de la longueur et de la largeur de la partie inférieure 7.

Dans le mode de réalisation particulier représenté sur les figures, l'élément de renfort 4 est fixé à cette paroi de bas de porte 3, plus précisément, la base 4a du U est fixée, par exemple par soudage, sur la face intérieure de la paroi de bas de porte 3.

Comme montré par la figure 2, les deux ailes latérales 4b de l'élément 4 de section transversale sensiblement en U s'étendent chacune près de la face intérieure du panneau extérieur 1 ou du panneau intérieur 2 de caisson.

De préférence, un jeu de trois à cinq millimètres est compris entre chacune des ailes latérales 4b et la face intérieure du panneau 1 ou 2 correspondant.

Dans l'exemple représenté, la base du U de l'élément de renfort 4 comprend une partie centrale plane 4a qui est fixée à la paroi de bas de porte 3. Cette partie centrale plane 4a est reliée à chacune des deux ailes latérales 4b par des parties inclinées 4c libres par rapport à la paroi de bas de porte 3.

L'élément de renfort 4 peut être une tôle d'acier pliée ayant une épaisseur de l'ordre de deux millimètres. Un tel élément de renfort est particulièrement économique à fabriquer et facile à installer.

L'élément de renfort 4 peut également être en aluminium embouti présentant une épaisseur d'un millimètre environ, ou en tout autre matériau adéquat.

La figure 3 montre la déformation subie par un choc latéral appliqué par un corps mobile se déplaçant à une vitesse de l'ordre de soixante km/heure.

Ce corps mobile se déplace au-dessus du caisson de bas de caisse 5 du véhicule et notamment au-dessus de la feuillure 6 qui est en regard de la partie inférieure 2a de la paroi de caisson 2 de la porte.

On voit sur la figure 3 que la porte et le caisson 5 de bas de caisse sont pliés vers l'intérieur du véhicule mais la partie inférieure 2a de la paroi de caisson 2 de la porte reste appliquée contre la la partie inférieure 7 de la porte. La porte ne s'est pas ouverte.

Ce résultat s'explique par la présence de l'élément de renfort 4 qui augmente significativement la résistance de la partie inférieure de la porte à l'égard de la déformation engendrée en cas de choc latéral.

L'invention a été décrite par rapport à un mode de réalisation particulier dans lequel l'élément de renfort est fixé à la paroi de bas de porte 3. Dans d'autres modes de réalisation non décrits, cet élément de renfort est fixé dans la partie inférieure 7 de la porte, soit au panneau extérieur 1, soit au panneau intérieur 2.

## Revendications

1. Porte de véhicule automobile comprenant un panneau extérieur (1) et un panneau intérieur de caisson (2) reliés entre eux dans une partie inférieure (7) de porte par une paroi de bas de porte (3) s'étendant transversalement par rapport aux deux panneaux (1, 2), **caractérisée en ce que** la partie inférieure (7) de porte est renforcée par un élément métallique (4), de section transversale sensiblement en U, et disposé dans cette partie inférieure (7) de sorte qu'une seule paroi choisie parmi les deux ailes latérales (4b) et la base de l'élément de renfort (4) est fixée dans la partie inférieure (7) de porte, les deux autres parois étant libres par rapport à la partie inférieure (7) et s'étendant en regard de la face intérieure du panneau (1, 2) ou de la paroi de bas de porte (3) correspondante.

2. Porte de véhicule automobile selon la revendication 1, **caractérisée en ce qu'**un jeu de trois à cinq millimètres est compris entre chacune des parois libres de l'élément de renfort (4) et la face intérieure du panneau (1, 2) ou de la paroi de bas de porte (3) correspondante.

3. Porte de véhicule automobile selon la revendication 1 ou 2, **caractérisée en ce que** l'élément de renfort (4) est fixé sur la paroi de bas de porte (3).

4. Porte de véhicule automobile selon la revendication 1 ou 2, **caractérisée en ce que** l'élément de renfort (4) est fixé sur le panneau extérieur de caisson (1).

5. Porte de véhicule automobile selon la revendication 1 ou 2, **caractérisée en ce que** l'élément de renfort (4) est fixé sur le panneau intérieur de caisson (2).

6. Porte de véhicule automobile selon l'une des revendications 1 à 5, **caractérisée en ce que** la base du U de l'élément de renfort (4) comprend une partie centrale plane (4a) reliée à chacune des deux ailes latérales (4b) par des parties inclinées (4c).

7. Porte de véhicule automobile selon l'une des revendications 1 à 6, **caractérisée en ce que** l'élément de renfort (4) est une tôle d'acier pliée

8. Porte de véhicule automobile selon l'une des revendications 1 à 6, **caractérisée en ce que** l'élément de renfort (4) est en aluminium embouti.

## Claims

1. Motor vehicle door comprising an outer door shell panel (1) and an inner door shell panel (2) connected to each other in a lower door portion (7) by a bottom surface of the door (3) lying transversely in relation to the two panels (1, 2), **characterized in that** the lower door portion (7) is reinforced by a metal member (4), with a generally U-shaped transverse cross section, and disposed in this lower portion (7) so that only one surface chosen from the two side flanges (4b) and the base of the reinforcing member (4) is attached in the lower door portion (7), the two other surfaces being free in relation to the lower portion (7) and lying facing the inner face of the panel (1, 2) or the corresponding bottom surface of the door (3).

2. Motor vehicle door according to Claim 1, **characterized in that** there is a clearance of three to five millimetres between each of the free surfaces of the reinforcing member (4) and the inner face of the panel (1, 2) or the corresponding bottom surface of the door (3).

3. Motor vehicle door according to Claim 1 or 2, **characterized in that** the reinforcing member (4) is attached to the bottom surface of the door (3).

4. Motor vehicle door according to Claim 1 or 2, **characterized in that** the reinforcing member (4) is attached to the outer door shell panel (1).

5. Motor vehicle door according to Claim 1 or 2, **characterized in that** the reinforcing member (4) is attached to the inner door shell panel (2).

6. Motor vehicle door according to one of Claims 1 to 5, **characterized in that** the base of the U of the reinforcing member (4) comprises a flat central portion (4a) connected to each of the two side flanges (4b) by inclined portions (4c).

7. Motor vehicle door according to one of Claims 1 to 6, **characterized in that** the reinforcing member (4) is a folded steel sheet.

8. Motor vehicle door according to one of Claims 1 to 6, **characterized in that** the reinforcing member (4) is made of pressed aluminium.

## Patentansprüche

1. Kraftfahrzeugtür, die eine Kastenaußenhaut (1) und eine Kasteninnenhaut (2), die in einem unteren Türteil (7) durch eine Türbasiswand (3), welche sich quer zu den beiden Häuten (1, 2) erstreckt, verbunden sind, aufweist, **dadurch gekennzeichnet, dass** der untere Türteil (7) durch ein Metallelement (4) mit einem im Wesentlichen U-förmigen Querschnitt verstärkt ist, das in diesem unteren Teil (7) so angeordnet ist, dass eine einzige Wand, die zwischen den beiden Seitenschenkeln (4b) und der Basis des Verstärkungselements (4) ausgewählt ist, in dem unteren Türteil (7) befestigt ist, wobei die beiden anderen Wände bezüglich des unteren Teils (7) frei sind und sich gegenüber der Innenseite der Haut (1, 2) oder der entsprechenden Türbasiswand (3) erstrecken.

2. Kraftfahrzeugtür nach Anspruch 1, **dadurch gekennzeichnet, dass** ein Spiel von drei bis fünf Millimetern zwischen jeder der freien Wände des Verstärkungselements (4) und der Innenseite der Haut (1, 2) oder der entsprechenden Türbasiswand (3) vorliegt.

3. Kraftfahrzeugtür nach Anspruch 1 oder 2, **dadurch gekennzeichnet, dass** das Verstärkungselement (4) an der Türbasiswand (3) befestigt ist.

4. Kraftfahrzeugtür nach Anspruch 1 oder 2, **dadurch gekennzeichnet, dass** das Verstärkungselement (4) an der Kastenaußenhaut (1) befestigt ist.

5. Kraftfahrzeugtür nach Anspruch 1 oder 2, **dadurch gekennzeichnet, dass** das Verstärkungselement (4) an der Kasteninnenhaut (2) befestigt ist.

6. Kraftfahrzeugtür nach einem der Ansprüche 1 bis 5, **dadurch gekennzeichnet, dass** die U-förmige Basis des Verstärkungselements (4) einen mittleren ebenen Teil (4a) aufweist, der durch geneigte Teile (4c) mit jedem der beiden Seitenschenkel (4b) verbunden ist.

7. Kraftfahrzeugtür nach einem der Ansprüche 1 bis 6, **dadurch gekennzeichnet, dass** das Verstärkungselement (4) ein umgebogenes Stahlblech ist.

8. Kraftfahrzeugtür nach einem der Ansprüche 1 bis 6, **dadurch gekennzeichnet, dass** das Verstärkungselement (4) aus tiefgezogenem Aluminium besteht.
